(19)

**Europäisches Patentamt**
**European Patent Office**
**Office européen des brevets**

(11)  **EP 4 273 623 B1**

(12)  **EUROPEAN PATENT SPECIFICATION**

(45) Date of publication and mention
of the grant of the patent:
**18.12.2024  Bulletin 2024/51**

(51) International Patent Classification (IPC):
***G02F 1/39*** (2006.01)

(52) Cooperative Patent Classification (CPC):
**G02F 1/3542; H01S 3/0057;** G02F 2203/26

(21) Application number: **22171982.6**

(22) Date of filing: **06.05.2022**

(54) **WAVELENGTH CONVERSION APPARATUS AND METHOD FOR SPECTRALLY CONVERTING LASER PULSES, AND LASER SOURCE APPARATUS INCLUDING THE WAVELENGTH CONVERSION APPARATUS**

WELLENLÄNGENUMWANDLUNGSVORRICHTUNG UND -VERFAHREN ZUR SPEKTRALEN UMWANDLUNG VON LASERIMPULSEN UND LASERQUELLENVORRICHTUNG MIT DER WELLENLÄNGENUMWANDLUNGSVORRICHTUNG

APPAREIL DE CONVERSION DE LONGUEUR D'ONDE ET PROCÉDÉ DE CONVERSION SPECTRALE D'IMPULSIONS LASER, ET APPAREIL DE SOURCE LASER COMPRENANT L'APPAREIL DE CONVERSION DE LONGUEUR D'ONDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.11.2023  Bulletin 2023/45**

(73) Proprietors:
• **Deutsches Elektronen-Synchrotron DESY**
**22607 Hamburg (DE)**
• **GSI Helmholtzzentrum für Schwerionenforschung GmbH**
**64291 Darmstadt (DE)**

(72) Inventors:
• **Heyl, Christoph**
**22607 Hamburg (DE)**
• **Balla, Prannay**
**22607 Hamburg (DE)**
• **Tünnermann, Henrik**
**22607 Hamburg (DE)**

(74) Representative: **v. Bezold & Partner Patentanwälte - PartG mbB**
**Ridlerstraße 57**
**80339 München (DE)**

(56) References cited:
**US-A1- 2003 012 492     US-A1- 2019 235 346**
**US-B2- 7 428 096**

• **CHRISTIAN GREBING ET AL: "Kilowatt-average-power compression of millijoule pulses in a gas-filled multi-pass cell", ARXIV.ORG, CORNELL UNIVERSITY LIBRARY, 201 OLIN LIBRARY CORNELL UNIVERSITY ITHACA, NY 14853, 1 March 2021 (2021-03-01), XP081903858, DOI: 10.1364/OL.408998**
• **LORENC ET AL: "Adaptive femtosecond pulse shaping to control supercontinuum generation in a microstructure fiber", OPTICS COMMUNICATIONS, ELSEVIER, AMSTERDAM, NL, vol. 276, no. 2, 14 June 2007 (2007-06-14), pages 288 - 292, XP022117377, ISSN: 0030-4018, DOI: 10.1016/J.OPTCOM.2007.04.015**
• **PETER J. DELFYETT ET AL: "Chirped pulse laser sources and applications", PROGRESS IN QUANTUM ELECTRONICS., vol. 36, no. 4-6, 3 November 2012 (2012-11-03), GB, pages 475 - 540, XP055342646, ISSN: 0079-6727, DOI: 10.1016/j.pquantelec.2012.10.001**
• **ALEXANDER PATAS ET AL: "Modifications of filament spectra by shaped octave-spanning laser pulses", ARXIV.ORG, CORNELL UNIVERSITY LIBRARY, 201 OLIN LIBRARY CORNELL UNIVERSITY ITHACA, NY 14853, 7 September 2018 (2018-09-07), XP080914724, DOI: 10.1103/PHYSREVA.98.033804**

EP 4 273 623 B1

## Description

Field of the invention

The invention relates to a wavelength conversion apparatus and to a wavelength conversion method for spectrally converting laser pulses by creating new spectral components of the laser pulses. Furthermore, the invention relates to a laser source apparatus including the wavelength conversion apparatus. Applications of the invention are available e. g. in the operation of laser systems creating ultra-short laser pulses, strong-field physics and material processing.

Technical background

In the present specification, reference is made to the following prior art illustrating technical background of the invention and related techniques:

[1] C. Grebing et al. in "Opt. Lett." 45, 6250-6253 (2020);
[2] A.-L. Viotti et al. in "Optica" 9, 197 (2022);
[3] J. C. Travers et al. in "Nat. Photonics" 13, 547-554 (2019);
[4] J. E. Beetar et al. in "Sci. Adv." 6, 34 (2020);
[5] WO 2021/007460 A1;
[6] US 7 724 787 B2;
[7] US 8 290 317 B2;
[8] US 2016/0064891 A1;
[9] US 6 141 129 A;
[10] C. M. Heyl et al. in "J. Phys. Photonics" 4, 014002, 2022;
[11] DE 10 2014 007 159 B4;
[12] H. Stark et al. in "Opt. Lett." 46, 969-972 (2021);
[13] M. Kaumanns et al. in "Opt. Lett." 46, 929-932 (2021);
[14] US 4 288 691; and
[15] M. Seidel et al. in "Ultrafast Science" vol. 2022, Article ID 9754919(https://doi.org/10.34133/2022/9754919).

It is generally known that high power ultrashort lasers are vital tools employed in various fields including attosecond science, strong-field physics and material processing. Commonly used laser platforms providing pico- or femtosecond pulses at high peak and/or average power comprise Ytterbium- (Yb), Ti:Sapphire- or Thulium-based lasers. These lasers have disadvantages in terms of limiting the center wavelength to very few operation points in the electromagnetic spectrum and limiting the average power to the kW range. As an example, Yb-based systems, optionally combined with post-compression units, can provide femtosecond pulses at kW average power [1, 2].

The extension of high-power femtosecond source technology to other wavelength regions, however, is a great challenge. Frequency shifting approaches are known, which routinely use Stimulated Raman Scattering (SRS) in optical fibers. However, the application of SRS is limited to low power levels. Other approaches providing higher power compatibility include soliton-shifting methods, dispersive wave generation [3] and Raman-based shifting approaches [4, 5] in hollow-core fibers or capillaries. Further fibre-based wavelength shifting techniques are described e. g. in [6] and [7]. A wide spectral coverage can also be provided by parametric frequency conversion employed e.g. in Optical Parametric Amplifiers (OPAs), see e. g. [8]. However, as a general disadvantage, all these methods suffer from either low efficiency or limited power handling capabilities. A further disadvantage results from limited frequency tuning capabilities of the conventional techniques.

A further approach for spectral frequency shifting is based on spectral broadening of input pulses and subsequent filtering a selected bandwidth out of the broadened pulses, as described e. g. in relation to frequency shifting of optical data signals in [9]. For spectral broadening of laser pulses, a multi-pass cell (MPC) including an optically non-linear material has been used (see e. g. [2], [10] and [11]). The MPC-based laser pulse broadening also could be combined with a band pass filter as it is known from frequency shifting of data signals. However, the application of the band pass filter on broadened pulses is a very inefficient process as the pulse energy is included in the fully broadened pulses and filtering results in using a small portion of the pulse energy only.

Objective of the invention

It is an objective of the invention to provide an improved wavelength conversion apparatus and/or method for spectrally converting laser pulses by creating new spectral components of the laser pulses, being capable of avoiding disadvantages of conventional techniques. Another objective of the invention is to provide an improved laser source apparatus being configured for creating laser pulses and spectrally converting the laser pulses by creating new spectral components, being capable of avoiding disadvantages of conventional techniques. In particular, the inventive technique is to be capable of creating spectrally converted laser pulses with increased peak power and/or average power, improving the efficiency of spectral conversion of laser pulses, facilitating frequency tuning of spectral laser pulse conversion and/or providing frequency tuning of spectral laser pulse conversion in extended frequency ranges.

Summary of the invention

These objectives are solved by an apparatus and/or a method for spectrally converting laser pulses and/or by a laser source apparatus, comprising the features of the independent claims. Advantageous embodiments and applications of the invention are defined in the dependent claims.

According to a first general aspect of the invention, the above objective is solved by a wavelength conversion apparatus, being configured for spectrally converting laser pulses by creating new spectral components of the laser pulses, comprising a multi-pass cell device including an optically non-linear Kerr medium and being arranged for receiving the laser pulses to be converted and transmitting the laser pulses through the optically non-linear medium multiple times, wherein the new spectral components of the laser pulses are created by self-phase modulation. According to the invention, the wavelength conversion apparatus further includes a pulse shaper device being arranged upstream of the multi-pass cell device and being capable of changing a spectral phase and/or an amplitude of the laser pulses for providing the laser pulses to be converted with a non-symmetrical temporal pulse shape having a leading flank and a trailing flank with different amounts of steepness, wherein the non-symmetrical temporal pulse shape yields a centre wavelength shift of the laser pulses by the self-phase modulation in the multi-pass cell device.

According to a second general aspect of the invention, the above objective is solved by a wavelength conversion method for spectrally converting laser pulses by creating new spectral components of the laser pulses, comprising the steps of creating the laser pulses to be converted with a laser source device, and receiving the laser pulses to be converted by a multi-pass cell device including an optically non-linear medium and transmitting the laser pulses through the optically non-linear medium multiple times, wherein the spectral components of the laser pulses are created by self-phase modulation. The laser pulses to be converted preferably have a pulse duration in a range from 10 fs to 1 ns, an average power in a range from 1 W, in particular from 50 W, to 100 kW, and/or a peak power in a range from 10 MW, in particular from 10 GW, to 100 TW. These parameter ranges are preferred for applications of the invention where other wavelength shifting methods do not exist. Other applications, in particular with less peak power and/or average power, are also available, wherein the laser source device may have deviating parameters, e. g. longer pulse durations, lower average power and/or lower peak power. The laser pulses to be converted may have a centre wavelength in the infrared, visible or ultraviolet spectral region.

According to the invention, the wavelength conversion method includes a step of shaping the laser pulses to be converted with a pulse shaper device being arranged between the laser source device and the multi-pass cell device and being capable of changing a spectral phase and/or an amplitude of the laser pulses, wherein the pulse shaper device provides the laser pulses to be converted with a non-symmetrical temporal pulse shape having a leading flank and a trailing flank with different amounts of steepness, and the non-symmetrical temporal pulse shape yields a centre wavelength shift of the laser pulses by self-phase modulation. Preferably, the method of the second general aspect of the invention or an embodiment thereof is executed with the wavelength conversion apparatus of the first general aspect of the invention or an embodiment thereof.

According to a third general aspect of the invention, the above objective is solved by a laser source apparatus, comprising a laser source device being arranged for creating laser pulses (input laser pulses) and a wavelength conversion apparatus according to the first general aspect of the invention or an embodiment thereof, wherein the wavelength conversion apparatus is arranged for receiving the laser pulses and for spectrally converting the laser pulses by creating spectral components of the laser pulses. Preferably, the laser source apparatus or an embodiment thereof is adapted for executing the wavelength conversion method of the second general aspect of the invention or an embodiment thereof.

Spectrally converting laser pulses by creating new spectral components of the laser pulses comprises changing (shifting) a centre wavelength of the laser pulses. Accordingly, the inventive apparatus and method for spectrally converting laser pulses may be denoted as apparatus and method for spectrally changing or shifting laser pulses.

The pulse shaper device is configured to change the spectral phase and/or amplitude of initial input laser pulses, resulting in laser pulses having the non-symmetrical temporal pulse shape (also called non-symmetrical or asymmetrical laser pulses). In the following, reference is made without limitation to the non-symmetrical shape of the laser pulses in the time domain. It is noted that the non-symmetrical temporal pulse shape inherently represents a non-symmetrical pulse shape in the frequency domain. Accordingly, the pulse shaper device can be understood as changing the spectral phase and/or amplitude of the input laser pulses for creating a non-symmetrical pulse shape in the frequency domain. The non-symmetrical pulse shape can be set by targeted modulation of the spectral phase or the spectral amplitude of the laser pulses only. Preferably, both of spectral amplitude and phase are changed, so that advantageously two degrees of freedom are available for pulse shaping.

Each of the non-symmetrical laser pulses has a leading flank and a trailing flank. The leading flank and the trailing flank have different amounts of steepness (or: slope), i. e. the pulse intensity is represented by a time function $I(t)$ wherein absolute values of the leading and trailing slopes

$$S = \left| \frac{dI}{dt} \right|$$

of the intensity function differ from each other. The term "amount of steepness" refers to an average slope of the flank, e. g. a linear slope from a flank beginning up to a pulse maximum. The amount of steepness can be used as an approximate quantity determining the amount of spectral shift $\Delta\omega$ for temporal pulse shapes with intensity envelopes changing approximately linearly with time over the flank as:

$$\Delta\omega = -B\frac{dI}{dt}$$

with B denoting the nonlinear phase (usually denotes as B-integral) acquired within the Kerr-medium. For highly nonlinear changes of the amplitude envelope, the amount of steepness is no longer a useful parameter and the spectral shift needs to be computed by numerical means.

For changing the spectral phase and/or amplitude of input laser pulses, the pulse shaper device includes at least one optical component, e. g. at least one reflective component and/or at least one refractive component and/or at least one spectrally dispersive component, which is/are adapted for receiving the input laser pulses, specifically influencing the spectral phase and/or amplitude of pulse frequency components, e. g. by reflection or transmission, and relaying the shaped pulses towards the multi-path cell device.

The pulse shaper device comprises e. g. a programmable spatial light modulator (SLM), in combination with an SLM controller. The SLM changes the phase of the laser pulses in the spectral domain, which results in a corresponding phase change in time domain. Employing the SLM offers the advantageous capability of a control of the pulse shaping, e. g. with a feedback control (see below). The spatial light modulator comprises e. g. an arrangement of a first dispersive component, like a prism or grating, for spatially separating frequency components of the light, a phase modulator adjusting the phases of the individual frequency components like e.g. a liquid crystal array or a digital mirror device (DMD), and a second first dispersive component, like a prism or grating, for recombining the frequency components.

Alternatively or in addition, the pulse shaper device may comprise dispersive mirrors, e. g. chirped mirrors, gratings, an electro-optical modulator and/or a dazzler. As another alternative, pulse shaping can be implemented as described e. g. in [14], or the pulse shaper device may comprise a further multi-pass cell device or an optical cavity including chirped end.

The pulse shaper device is arranged upstream of the multi-pass cell device along the beam path through the wavelength conversion apparatus. Accordingly, laser pulses being shaped by the pulse shaper device are subsequently introduced into the multi-pass cell device. The laser pulses may be sent directly to the multi-pass cell device, or further pulse processing may be included between the pulse shaper device and the multi-pass cell device.

The multi-pass cell device comprises MPC mirrors and the optically non-linear medium. Preferably, the MPC mirrors have a known geometry made of two curved integral mirrors, as described e. g. in [10]. Alternatively, a configuration with multiple single mirrors spanning the multi-pass beam path through the optically non-linear medium can be provided. Each of the MPC mirrors has a reflector made of a stack of dielectric layers. The dielectric layers, in particular the number, materials and thicknesses thereof are selected for obtaining a high degree of reflectivity, e. g. above 99%, for obtaining an appropriate bandwidth, and for introducing a dispersion into the beam path. The multi-pass cell device is adapted for multiple passages, e. g. at least 5 passages , of a laser pulse by reflections at the MPC mirrors.

The multi-path cell device preferably includes a Herriott type cell comprising a cavity with two opposing curved, in particular spherical, MPC mirrors. At least one of the mirrors may include a hole for introducing laser pulses in and/or outcoupling the spectrally converted laser pulses out of the cavity. Alternatively, auxiliary mirrors, including an incoupling mirror and an outcoupling mirror, can be arranged between the MPC mirrors for incoupling and outcoupling the laser pulses into and out of the cavity, resp..

The beam path of the multi-path cell device runs through the optically non-linear medium. The optically non-linear medium may comprise a solid transparent material which is capable of inducing self-phase modulation of the laser pulses (Kerr-active material), e.g. glass, like fused silica, between the mirrors. The Kerr-active material may comprise one or multiple plate-shaped sections, e. g. bulk plates, of the transparent material. If the optically non-linear medium comprises multiple bulk plates, advantages for reaching a larger accumulated non-linear phase in the multi-path cell device are obtained [15]. The multi-path cell device including the solid transparent material preferably is evacuated. Alternatively or in addition, the optically non-linear medium may comprise a gas included in the multi-path cell device, i. e. the multi-path cell device may include a gas filled cavity or may be placed in a gas-filled chamber. The gas filled multi-pass cell is preferred for converting laser pulses with high peak power. The gas may comprise e. g. Argon, Krypton, Xenon or Helium.

The inventors have found that circulating of non-symmetrical laser pulses in the multi-pass cell device and interacting of the circulating pulses with the optically non-linear medium results in a non-symmetrical spectral broadening of the pulses. The non-symmetrical spectral broadening of the pulses means that new spectral components are created on an upper or on a lower frequency side of the pulse spectrum, resulting in a shift of the centre wavelength of the pulses to be obtained.

Advantageously, the invention provides a pulse wavelength tuning technique which allows, but is not limited to low power applications, and further can be applied also with high peak- and average power lasers. The employed concept provides great power scaling prospects as both Yb lasers as well as multi-pass cells support kW average powers [1, 12] and TW peak powers [13]. Experimental tests by the inventors demonstrated an efficient shifting of femtosecond laser pulses from e. g. 1030 nm to 1000 nm. Moreover, via numerical simulations, the inventors found that the shifting range and efficiency can be extended by broadening the mirror bandwidth of the multi-path cell device and optionally by adjusting nonlinearities in the multi-pass cell. Thus, the invention provides a route for efficient spectral shifting of high-average and peak power lasers to wavelength regions not easily accessible by available ultrafast laser platforms.

A further advantage of the invention results from the low complexity but high efficiency of the optical set-up which can be provided with available optical components. As another advantage, the spectrally converted laser pulses output from the multi-path cell device have an improved temporal pulse quality, in particular improved temporal contrast. Major temporal contrast improvements can be obtained in particular for large spectral shifts if the spectrum of the spectrally shifted laser pulse does not overlap with the spectrum of the input pulse into the spectral shifting apparatus. Temporal pulse quality improvement provides further applications of the invention besides spectral shifting, where laser sources with high temporal pulse quality are needed.

According to a preferred embodiment of the invention, the pulse shaper device is configured for creating the leading flank or the trailing flank as an abruptly changing flank (or step-like flank), particularly preferred for adapting the non-symmetrical temporal pulse shape to a non-symmetrical saw-tooth shape (shape matched to a rectangular triangle). Creating the leading flank or the trailing flank as an abruptly changing flank, in particular for adapting the non-symmetrical temporal pulse shape to a non-symmetrical saw-tooth shape, advantageously improves the efficiency of the laser pulse conversion and allows an extension of the wavelength tuning range.

The particularly preferred saw-tooth shape of the laser pulses has advantages in terms of optimizing the efficiency of the wavelength-shifting process. The intensity of the pulse flanks of saw-tooth shaped laser pulses changes linearly with time. Contrarily, a non-perfect saw-tooth shape for which the intensity of the pulse flanks changes nonlinearly with time does not only shift the centre wavelength, but also spectrally broadens the laser pulses, thus resulting in spectrally converted laser pulses of larger bandwidth.

The term abruptly changing flank refers to a flank shape which is matched towards a step shape or a flank of a rectangular pulse. Deviating from this ideal representation of the shape, a flank is considered to form an abruptly changing flank if the duration of the flank is less than about 20%. With a practical application, the matching of steepness of the abruptly changing flank to the ideal step shape will depend on the spectral bandwidth of the input laser pulse (a larger bandwidth allows sharper features in time).

Advantageously, the invention is capable of shifting the centre wavelength of the laser pulses to one of both directions of shorter or longer wavelengths. While it is generally known that the leading edge of conventional symmetrical pulses is shifted to longer wavelengths by self-phase modulation, the inventors have found that it is the flank with the smaller steepness that causes a spectral shift of the major part of the energy of non-symmetrical pulses. The inventors have found that the flank with larger steepness also causes shifted frequencies but at much reduced energy. In particular for a pulse adapted to an ideal saw-tooth shape, the frequency shift of the flank with larger steepness may approach large values but zero pulse energy whereas the shifted energy by the flank with weaker steepness contains (almost) all energy. Thus, according to a first variant, the pulse shaper device is configured for forming the non-symmetrical temporal pulse shape such that the leading flank has a larger steepness than the trailing flank and the centre wavelength of the laser pulses is shifted to shorter wavelengths. According to a second, alternative variant, the pulse shaper device is configured for forming the non-symmetrical temporal pulse shape such that the trailing flank has a larger steepness than the leading flank and the centre wavelength of the laser pulses is shifted to longer wavelengths.

With a preferred embodiment of the inventive laser source apparatus, the pulse shaper device of the wavelength conversion apparatus may be included in the laser source device. Accordingly, the laser source device may be configured for adjusting the spectral phase and/or amplitude of the initially created laser pulses such that the laser pulses have the non-symmetrical temporal pulse shape. Advantageously, by combining the laser source device with the pulse shaper device, a compact configuration of the laser source apparatus can be obtained.

According to a further preferred embodiment of the invention, a spectral filter device is arranged for receiving the laser pulses after passing the multi-pass cell device and for subjecting the laser pulses to spectrally filtering and/or separating from residual broadband spectral components. The spectral filter device may comprise an absorptive filter and/or a reflective filter, e. g. at least one optical pass-band filter and/or at least one optical edge filter. If the spectral filter device comprises at least one dichroic filter, advantages for filtering high power pulses are obtained. As a reflective filter, a grating in combination with a hard boundary may be used for stretching the spectrum of the spectrally converted laser pulses and selecting a spectral range with the hard boundary, like e. g. a diaphragm. In terms of the method, the laser pulses preferably are subjected to spectrally filtering and/or separating from residual broadband spectral components after passing the multi-pass cell device. Advantageously, the spectral filtering device may fulfil multiple tasks. Firstly, an additional selection of the centre wavelength of the spectrally converted laser pulses may be provided. Furthermore, the spectral purity of the spectrally converted laser pulses may be improved. In addition, if implemented using dispersive components such as a grating, the spectral filter device might be used to remove a remaining chirp of the spectrally shifted pulse, thus spectrally filtering and temporally compressing the pulse.

According to a particularly advantageous embodiment of the invention, a pulse amplifier device is arranged upstream of the multi-path cell device for amplifying the laser pulses to be provided to the multi-pass cell device. In terms of the method, the laser pulses preferably are amplified before providing them to the multi-path cell device. Advantageously, introducing pulse amplification allows an extension of the spectral conversion of laser pulses even to higher peak power and/or average power ranges. Amplifying the laser pulses before wavelength shifting in the multi-path cell device may be executed before, during and/or after pulse shaping. Particularly preferred, the pulse amplifier device is arranged downstream of the pulse shaper device and upstream of the multi-path cell device, so that possible power limitations of the pulse shaper device may be circumvented.

Preferably, a pulse stretcher device may be arranged upstream of the pulse amplifier device for temporally stretching the laser pulses and a pulse compressor device being arranged between the pulse amplifier device and the multi-pass cell device for temporally compressing the laser pulses. Advantageously, the pulse stretcher device facilitates temporal pulse stretching prior to pulse amplification with the pulse amplifier device thus employing the well-known chirped-pulse amplification method. Particularly preferred, the pulse shaper device is arranged between the pulse stretcher device and the pulse amplifier device. With this embodiment, available high power laser sources may be used for creating the input laser pulses in an advantageous manner. Alternatively, the pulse shaper device is arranged between the pulse compressor device and the multi-pass cell device. With this embodiment, pulse shaper and multi-pass cell devices may be arranged within an add-on unit which can be installed downstream of existing laser sources without the need to modify the laser source.. In addition, or as a further alternative, the pulse shaper device may be included in the pulse stretcher device and/or in the pulse compressor device. Accordingly, the pulse stretcher device and/or the pulse compressor device can be configured for creating the non-symmetrical temporal pulse shape by changing the spectral phase and/or the amplitude of the laser pulses.

According to a further preferred embodiment of the invention, a centre wavelength shift setting device may be coupled with the pulse shaper device. The centre wavelength shift setting device is configured for tuning, in particular feedback-controlling, at least one of a direction and an amount of the centre wavelength shift of the laser pulses. In terms of the method, preferably at least one of a direction and an amount of the centre wavelength shift of the laser pulses is tuned by the centre wavelength shifting device, which is coupled with the pulse shaper device and/or the multi-pass cell device and/or arranged for adjusting an input power of the laser pulses introduced to the multi-pass cell device. It is not strictly necessary to provide a feedback control of the direction and/or amount of the centre wavelength shift. Alternatively, the centre wavelength shift setting device can be employed for setting the direction and/or amount of the centre wavelength shift based on predetermined calibration data or reference tests. Alternatively or in addition, the centre wavelength shift setting device can be arranged for adjusting an input power of the laser pulses introduced to the multi-pass cell device.

Advantageously, the centre wavelength shift setting device is adapted for adjusting the non-symmetrical temporal pulse shape of the laser pulses, e. g. by computer-controlled setting the pulse shaper device, and/or for setting operation conditions of the multi-pass cell device, like a position of the optically non-linear Kerr material or a gas pressure within the multi-pass cell device. Thus, in particular the feedback control can be provided, wherein the centre wavelength of the spectrally converted laser pulses is sensed with a spectrally resolving detector, the sensed centre wavelength is compared with a set-point value of the centre wavelength to be obtained and the pulse shaper device and/or the multi-pass cell device is adjusted in dependency on a deviation between the sensed centre wavelength and the centre wavelength to be obtained.

According to a particularly preferred embodiment of the invention, the multi-path cell device is dispersion-balanced, wherein accumulated mirror dispersion in the multi-path cell device is matched to accumulated linear dispersion acquired by the laser pulses in the optically nonlinear medium. Advantageously, with the dispersion-balance, keeping the non-symmetric pulse shape during circulation in the multi-path cell device is facilitated. Dispersion-balancing of the multi-path cell device preferably is obtained by employing chirped end mirrors of the multi-path cell device. Mirror chirp is selected such that the linear dispersion applied by the optically nonlinear medium is compensated.

According to a further advantageous feature, the wavelength conversion apparatus may be provided with an end compressor device which is arranged downstream of the multi-path cell device for temporally compressing the laser pulses after passing the multi-path cell device. Advantageously, the end compressor device provides a reduction of the duration of the spectrally converted laser pulses e.g. by a factor of about 2 to 10 or more.

Features disclosed in the context of the wavelength conversion apparatus and/or the laser source apparatus and the embodiments thereof also represent preferred features of the inventive wavelength conversion apparatus method and vice versa. The aforementioned aspects and inventive and preferred features, in particular with regard to the configuration of the wavelength conversion apparatus and/or the laser source apparatus as well as the design and configuration of individual components thereof, therefore also apply for the wavelength conversion method. The preferred embodiments, variants and features of the invention described above are combinable with one another as desired.

Brief description of the drawings

Further advantages and details of the invention are described in the following with reference to the attached drawings, which schematically show in:

Figures 1 to 3: features of embodiments of the wavelength conversion apparatus according to the invention;

Figure 4: a frequency shift applied to laser pulses in the multi-path cell device;

Figure 5: experimental results illustrating input and output spectra of the multi-path cell device; and

Figures 6 to 10: embodiments of the laser source apparatus according to the invention, including various variants of the wavelength conversion apparatus.

Detailed description of preferred embodiments of the invention

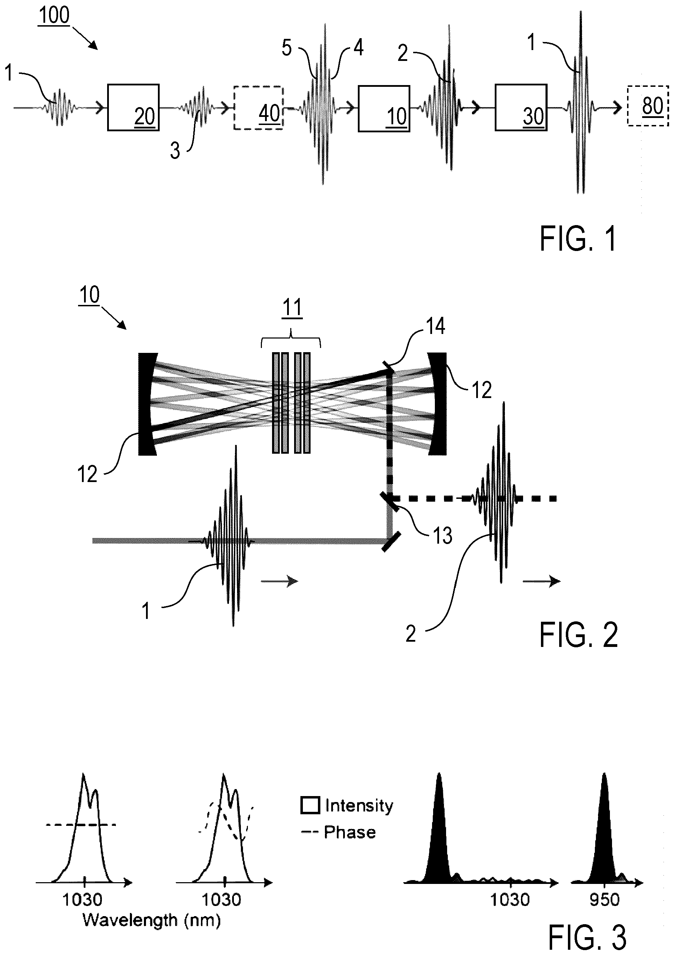

Embodiments of the inventive wavelength conversion apparatus are described in the following in with particular reference to the provision of the pulse shaper device for changing a spectral phase and/or an amplitude of the input laser pulses to be spectrally converted in the MPC, the optional combination of the pulse shaper device with further pulse processing, like amplifying, and the MPC (see e. g. Figures 1 to 5). Details of the pulse processing, the available control schemes thereof and available schemes of pulse monitoring (pulse diagnosis) are not described as far as they are known per se from prior art. The beam path of the wavelength conversion apparatus and the laser source apparatus is schematically shown in the Figures. In practice, the beam path may have a more complex course, optionally in one or more planes of an optical set-up.

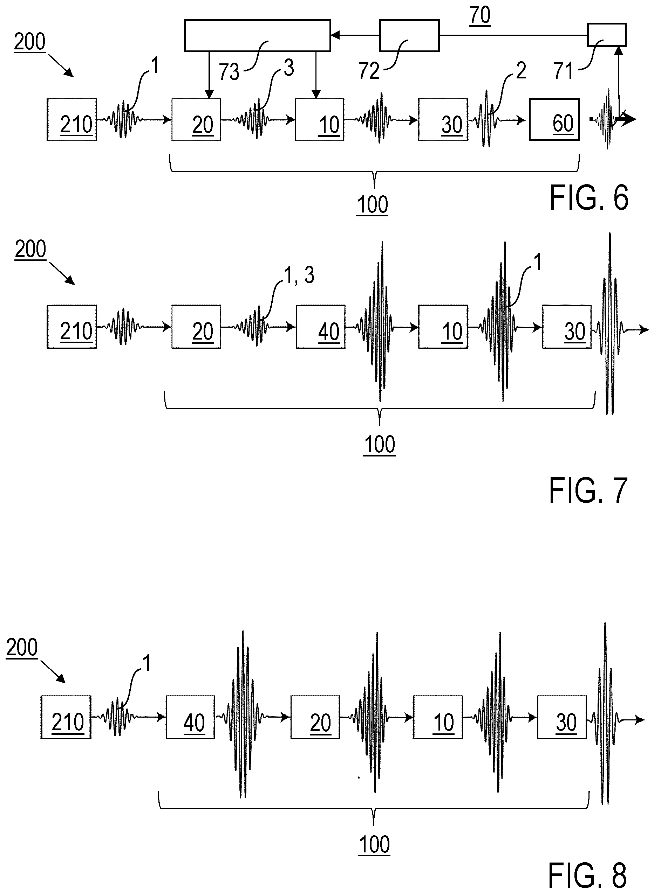

For providing the inventive laser source apparatus, the wavelength conversion apparatus is combined with a laser source device being arranged for creating the input laser pulses to be converted (see e. g. Figures 6 to 10). Details of the laser source device and operation thereof are not described as they are known per se from prior art. At least one component of the wavelength conversion apparatus and/or the laser source apparatus may be provided as a combination of components being adapted for multiple pulse processing tasks. For example, the pulse shaper device of the wavelength conversion apparatus may be combined with a pulse stretcher or pulse compressor. Furthermore, the pulse shaper device may be included in the laser source device of the laser source apparatus, i. e. the laser source device can be configured for generating the laser pulses with the non-symmetrical pulse shape.

The laser pulses to be converted are indicated with reference numeral 1 from the generation thereof as input laser pulses to the output as spectrally converted and optionally filtered pulses. The non-symmetrical temporal pulse shape 3 of the laser pulses 1 after pulse shaping is shown with a leading flank 4 and a trailing flank 5. It is noted that the pulses shapes are schematically shown. In practical application of the invention, the shaped laser pulses may have a more complex, but non-symmetrical temporal pulse shape. The invention preferably is applied with sequences of laser pulses, particularly preferred with periodic pulse sequences, e. g. with a repetition frequency in a range from 10 Hz to 100 MHz. For describing the invention, reference is made in the following to exemplary single laser pulses of a sequence of laser pulses. The wavelength conversion is applied to each laser pulse included in the sequence. The invention can be applied for spectrally shifting groups of laser pulses or single laser pulses as well, e. g. the wavelength conversion apparatus 100 may be operated in particular in a single shot regime.

Figure 1 illustrates features of preferred embodiments of the wavelength conversion apparatus 100, comprising the multi-pass cell device 10 (see Figure 2) and the pulse shaper device 20, for an efficient and high-power compatible spectral shifting scheme. Preferably, a spectral filter device 30 is arranged for post-processing the converted laser pulses. Optionally, an amplifier device 40 may be provided before spectral shifting the laser pulses as described with further details below. The spectrally converted laser pulses 1 may be subjected to further pulse processing, like amplification, before an application thereof, or they may be directly supplied to an application site. As an example, an end compressor device 80 may be arranged downstream of the multi-pass cell device 10. The end compressor device 80 is adapted for temporally compressing the spectrally converted laser pulses 1, thus reducing the pulse duration and increasing the peak power thereof.

The pulse shaper device 20 comprises e. g. an SLM and/or a set of dispersive mirrors. An incoming, optionally chirped input laser pulse 1 is generated with a laser source device 210 (see Figures 6 to 10). The input laser pulse 1 received by the pulse shaper device 20 has e. g. a symmetric Gauss shape. With the pulse shaper device 20, the laser pulse 1 is shaped in phase and optionally amplitude so that a non-symmetrical temporal pulse shape 3 is provided. Figure 3A illustrates an example of a laser pulse spectrum (amplitude and phase) corresponding to an approximately symmetric temporal pulse shape and the corresponding spectrum after phase shaping leading to a non-symmetrical temporal pulse shape 3.

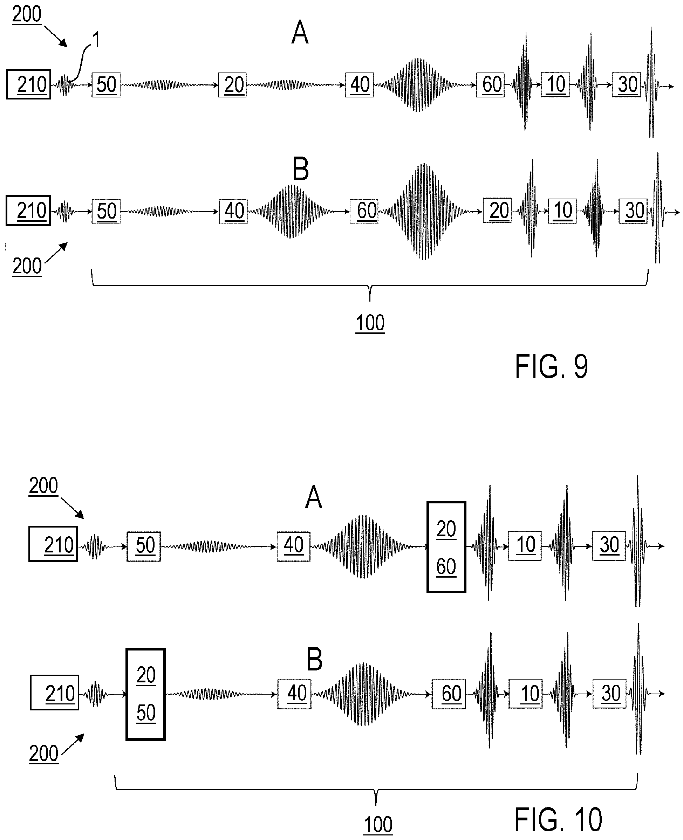

In an optional second step, the laser pulse 1 can be amplified and, if implemented in a chirped pulse amplification (CPA) scheme, compressed. The amplifier device 40 comprises e. g. a chirped pulse amplifier combined with a pulse compressor (not shown, see e. g. Figure 9) and may be based on fiber, bulk, Innoslab, disk or other amplifier technology. The pulse shaper device 20, optionally in combination with the amplifier device 40, are configured for reaching a temporal saw-tooth pulse shape 3 after amplification (optionally with compression) at the input to a multi-pass cell device 10.

In a third step, the laser pulse 1 is sent into the multi-pass cell device 10, which comprises a dispersion-balanced nonlinear MPC. As shown in Figure 2, the laser pulse 1 is introduced into the multi-pass cell device 10 via a first deflecting auxiliary mirror 13 and a second deflecting auxiliary mirror 14. The first deflecting auxiliary mirror 13 is a dichroic mirror which is adapted for passing the shaped laser pulse 1 to be introduced into the multi-pass cell device 10 and for reflecting the spectrally converted laser pulse 1 including new spectral components 2 towards the spectral filter device 30 (see Figure 1), to a further pulse processing stage or directly to an application site. The second deflecting auxiliary mirror 14, e. g. a metal or multi-layer reflector, is arranged for incoupling and outcoupling laser pulses.

As shown with further details in Figure 2, the multi-pass cell device 10 comprises two curved integral MPC mirrors 12 and an optically non-linear medium 11. The MPC mirrors 12 have a geometry as described e. g. in [10]. Each of the MPC mirrors 12 has a reflector made of a stack of dielectric layers. The dielectric layers introduce dispersion into the beam path within the multi-pass cell device 10. The dispersion is selected such that the dispersion introduced by the optically non-linear medium 11 is compensated by the MPC mirrors 12. In other words, the amount of accumulated dispersion collected by a laser pulse by all reflections at the MPC mirrors 12 is equal or approximately equal to the dispersion introduced by the optically non-linear medium 11, but has the opposite sign. By this dispersion design, the multi-pass cell device 10 pulse shape is kept during the passage of the laser pulses 1. The two MPC mirrors may thereby introduce identical or different dispersion. In particular, a matched-pair chirped mirror design may be chosen where the frequency-dependent group-delay dispersion (GDD) of one MPC mirrors may oscillate as a function of wavelength and where the second MPC mirror is designed such that the GDD oscillations introduced by the first MPC mirror are compensated by the second MPC mirror. Advantageously, a matched-pair mirror design can provide very large spectral bandwidths reaching one optical octave and more.

The optically non-linear medium 11 is arranged for an optically non-linear interaction with the laser pulses running through the MPC. By self-phase modulation, a linear phase change in time is introduced and new spectral components are generated. While self-phase modulation of symmetric, e. g. Gaussian pulses, would result in the generation of spectral components on both of high and low frequency sides of the input pulses (spectral broadening), the self-phase modulation of non-symmetric pulses yields the generation of spectral components on mainly one of the high and low frequency sides. As a result, the centre wavelengths of the laser pulses is shifted towards the side, where the new spectral components are generated.

For example, with pulse shaping such that the leading flank 4 has a larger amount of steepness than the trailing flank 5, the centre wavelength of the laser pulses 1 output by the multi-pass cell device 10 is shifted to higher frequencies (or shorter wavelengths). Figure 3B illustrates a simulated example of the spectrally shifted laser pulses 1. The generation of the new spectral components is influenced by the steepness of the flank with smaller steepness of the laser pulses shaped before introduction to the MPC. By setting the steepness with the pulse shaper device 20, the wavelength shift of the laser pulses in the multi-pass cell device 10 can be adjusted. With increasing the steepness the wavelength shift is increased.

The optically non-linear medium 11 comprises a solid material arranged in the beam path of the multi-pass cell device 10. As an example, the optically non-linear medium 11 comprises multiple plate shaped sections of a transparent Kerr active material, like e. g. fused silica.

With a practical example, the MPC mirrors 12 have a 100 mm radius of curvature and a 50.8 mm diameter. The group delay dispersion of each of the MPC mirrors is approximately -200 fs$^2$ within a 990 nm to 1070 nm bandwidth, while the group delay dispersion introduced by the optically non-linear medium 11 is about +200 fs$^2$. The optically non-linear medium 11 comprises four plate shaped sections made of fused silica. Two of the plate shaped sections (placed close to the focus of the multi-pass cell device 10, and having a nano-structured (R<0.15%) anti-reflection coating) have a thickness of e. g. 4 mm, while the other two plate shaped sections (placed on either side at about 2 cm distance from the focus, and having a multi-layer (R<0.1%) anti-reflection coating) have a thickness of e. g. 2 mm.

The spectral filter device 30 comprises e. g. an optical band pass filter. Using the spectral filter, the wavelength-shifted spectrum of the converted laser pulses 1 may be separated from possible residual broadband wavelength components. Figure 3C illustrates a simulated example of the spectrally shifted laser pulses 1 after filtering.

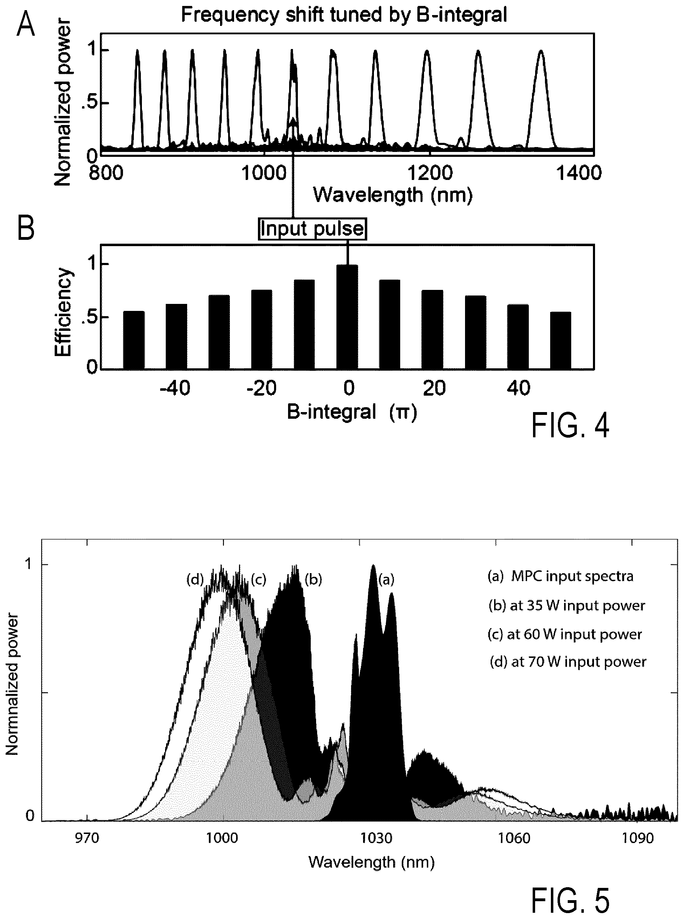

The inventors have demonstrated the inventive spectral conversion of laser pulses by numerical simulations and by experiments, as described in the following. Numerical simulations were carried out using a nonlinear pulse propagation code software and assumed an input laser pulse 1 with a duration of 190 fs, matching the Fourier limit of the amplified pulses in the subsequent practical experiments, neglectable MPC mirror losses and neglectable B-integral limitations. The inventors have found a phase of the laser pulses optimized to maximize the efficiency when shifting to a targeted output frequency. Accordingly, spectral tuning is possible by changing the B-integral in the multi-pass cell device 10, as illustrated in Figure 4, which shows the resulting highly efficient spectral shifting characteristics (Figure 4A) in relation to the B-integral-dependent efficiency (Figure 4B) in the multi-pass cell device 10.

Furthermore, the inventors have tested the inventive technique experimentally by employing an available 80 W Yb laser system as a laser source device 210 (see Figures 6 to 10). The laser system delivers laser pulses with a centre wavelength of 1030 nm and a duration of about 200 fs at 65 MHz repetition rate. Inside the laser system, the pulses are stretched to 120 ps. The stretched pulses are shaped with a programmable SLM, employed as the pulse shaper device 20. Subsequently, the shaped laser pulses are supplied to a second stretcher and a two-stage amplification system and a compressor. The pulses are then coupled into the multi-pass cell device 10, comprising two dielectric concave MPC mirrors 12, e. g. with the dimensions and parameters mentioned above. In this configuration, the laser pulses experience a near net zero GDD per pass through the multipass cell device 10. The distance between the MPC mirrors 12 is set to about 192 mm. The throughput of the MPC is about 82%.

In order to shift the spectrum of the laser pulse, a phase is applied to the initially generated laser pulse so that a sawtooth-like pulse is formed, resulting in an asymmetrically broadened spectrum at the MPC output. For a given phase, the location of the spectral peak can be tuned by adjusting the B-integral in the multi-pass cell device 10 (see Figure 4). In the experiment, the inventors have tuned the B-integral by changing the input power into the multi-pass cell device 10. However, the B-integral could also be changed by adjusting the position of the plate shaped sections of the optically non-linear medium 11. Alternatively, the B integral could be changed with the gas-pressure, if a gas-filled MPC is employed.

The broadened spectrum at different input average powers into the MPC is shown in Figure 5. The frequency-shifted spectrum with the largest shift recorded contains 63% of the output power after the MPC in the spectral peak centered at 1000 nm. In a second configuration with changed pulse shaper settings (not displayed), a frequency shift from 1030 nm to 1062 nm centre wavelength could be experimentally demonstrated with an output power after the MPC of 67% contained in the peak centered at 1062 nm. The residual pedestal at wavelengths outside the targeted spectral region can most likely be attributed to phase modulation inaccuracies induced by a weak nonlinear phase inside the amplifier.

Figures 6 to 10 illustrate embodiments of the inventive laser source apparatus 200 comprising a laser source device 210 for creating laser pulses 1 and the wavelength conversion apparatus 100 according to the invention. The wavelength conversion apparatus 100 is arranged for receiving and spectrally converting the input laser pulses 1 as described above.

According to Figure 6, the wavelength conversion apparatus 100 is configured as described above with reference to Figures 1 to 5. Additionally, Figure 6 shows a centre wavelength shift setting device 70 being coupled with the pulse shaper device 20 and/or the multi-pass cell device 10 and being configured for tuning, in particular feedback-controlling, a direction and/or an amount of the centre wavelength shift of the laser pulses 1. A spectrally resolving detector 71 is arranged for determining the centre wavelength of the spectrally converted pulses 1. The spectrally resolving detector 71 is connected with a feedback control unit 72 comparing the sensed centre wavelength with a set-point wavelength and driving an actuator 73, which is arranged for adjusting the pulse shaping device 20, e. g. setting the phases of the frequency components of the input pulses, and/or for adjusting the B-integral of the multi-pass cell device 10. Due to the dependency of the centre wavelength shift of the laser pulses on the steepness of the pulse shaping and/or on the B-integral of the multi-pass cell device 10, the centre wavelength of the spectrally converted laser pulses can be precisely and reproducibly controlled with the centre wavelength shift setting device 70. Alternatively or in addition, the centre wavelength shift setting device 70 may be coupled with the laser source device 210 for setting an input power of the laser pulses 1.

Figure 7 shows a variant of the invention, wherein an amplifier device 40 is arranged for pulse amplification of the laser pulses 1 with the non-symmetrically pulse shape 3. The amplifier device 40 is arranged between the pulse shaper device 20 and the multi-pass cell device 10, and it comprises e. g. a fiber, bulk, Innoslab or disk amplifier. Advantageously, possible power limitations of the pulse shaper device 20 can be avoided by providing the amplifier device 40, while creating the spectrally converted laser pulses 1 with an appropriatly high peak power or average power.

Alternatively, as shown in Figure 8, an amplifier device 40 can be arranged for pulse amplification of the input laser pulses 1, i. e. upstream of the pulse shaper device 20. Again, the amplifier device 40 may comprise e. g. a fiber, bulk, Innoslab or disk. The embodiment of Figure 8 may have advantages in particular in terms of employing a low power laser source device 210 and/or facilitating pulse shaping in the pulse shaper device 20.

Figure 9 shows variants of the invention, wherein a combination of a pulse stretcher device 50 and a pulse compressor device 60 is provided. The pulse stretcher device 50 is arranged as an input of the wavelength conversion apparatus 100 for receiving the input laser pulses 1 from the laser source device 210. The pulse stretcher device 50 increases the pulse duration of the laser pulses 1, e. g. from 200 fs to 60 ps, thus reducing the peak power of the laser pulses. For compensating the effect of the pulse stretcher device 50 and recompressing the laser pulses, the pulse compressor device 60 is arranged downstream of the amplifier device 40, either after the pulse shaper device 20 (Figure 9A) or before the pulse shaper device 20 (Figure 9B).

Advantageously, with the embodiment of Figure 9A, the pulse stretcher device 50 allows employing available high-power laser source devices 210 in the laser source apparatus 200 without a power limitation by the pulse shaper device 20. With the embodiment of Figure 9B, frequency-shifting apparatus can be advantageously implemented as add-on to an existing laser source apparatus as pulse shaper and multi-pass cell device are placed down-stream after the CPA compressor.

The pulse shaper device 20 may be combined with the pulse stretcher device 50 or with the pulse compressor device 60, as schematically shown in Figure 10. According to Figure 10A, the pulse shaper device 20 includes a pulse compressing component, so that the embodiment of Figure 9B is obtained with a configuration having less complexity. Alternatively, according to Figure 10B, the pulse shaper device 20 includes a pulse stretching component, so that the embodiment of Figure 9A is obtained, again with less complexity.

The features of the invention disclosed in the above description, the drawings and the claims can be of significance both individually as well as in combination or sub-combination for the realization of the invention in its various embodiments. The invention is not restricted to the preferred embodiments described above. Rather a plurality of variants and derivatives is possible which also use the inventive concept and therefore fall within the scope of protection. In addition, the invention also claims protection for the subject and features of the subclaims independently of the features and claims to which they refer.

**Claims**

1. Wavelength conversion apparatus (100), being configured for spectrally converting laser pulses (1) by creating new spectral components (2) of the laser pulses (1), comprising

   - a multi-pass cell device (10) including an optically non-linear medium (11) and being arranged for receiving the laser pulses (1) to be converted and transmitting the laser pulses (1) through the optically non-linear medium (11) multiple times, wherein the new spectral components (2) of the laser pulses (1) are created by self-phase modulation,
   **characterized by**
   - a pulse shaper device (20) being arranged upstream of the multi-pass cell device (10) and being capable of changing the spectral phase and/or the amplitude of the laser pulses (1) for providing the laser pulses (1) to be converted with a non-symmetrical temporal pulse shape (3) having a leading flank (4) and a trailing flank (5) with different amounts of steepness, wherein the non-symmetrical temporal pulse shape (3) yields a centre wavelength shift of the laser pulses (1) by the self-phase modulation in the multi-pass cell device (10).

2. Wavelength conversion apparatus according to claim 1, wherein

   - the pulse shaper device (20) is configured for creating the leading flank (4) or the trailing flank (5) as an abruptly changing flank, in particular for adapting the non-symmetrical temporal pulse shape (3) to a non-symmetrical saw-tooth shape.

3. Wavelength conversion apparatus according to one of the foregoing claims, wherein

   - the pulse shaper device (20) is configured for forming the non-symmetrical temporal pulse shape (3) such that the leading flank (4) has a larger amount of steepness than the trailing flank (5) and the centre wavelength of the laser pulses (1) is shifted to shorter wavelengths, or
   - the pulse shaper device (20) is configured for forming the non-symmetrical temporal pulse shape (3) such that the trailing flank (5) has a larger amount of steepness than the leading flank (4) and the centre wavelength of the laser pulses (1) is shifted to longer wavelengths.

4. Wavelength conversion apparatus according to one of the foregoing claims, further comprising

   - a spectral filter device (30) being arranged for receiving the laser pulses (1) after passing the multi-pass cell device (10) and for subjecting the laser pulses (1) to spectrally filtering and/or separating from residual broadband spectral components.

5. Wavelength conversion apparatus according to one of the foregoing claims, further comprising

   - a pulse amplifier device (40) being arranged upstream of the multi-pass cell device (10) for amplifying the laser pulses (1) to be provided to the multi-pass cell device (10).

**6.** Wavelength conversion apparatus according to claim 5, further comprising

- a pulse stretcher device (50) being arranged upstream of the pulse amplifier device (40) for temporally stretching the laser pulses (1) and a pulse compressor device (60) being arranged between the pulse amplifier device (40) and the multi-pass cell device (10) for temporally compressing the laser pulses (1).

**7.** Wavelength conversion apparatus according to claim 6, wherein

- the pulse shaper device (20) is arranged between the pulse stretcher device (50) and the pulse amplifier device (40), or between the pulse compressor device (60) and the multi-pass cell device (10), and/or
- the pulse shaper device (20) is included in the pulse stretcher device (50) and/or in the pulse compressor device (60).

**8.** Wavelength conversion apparatus according to one of the foregoing claims, further comprising

- a centre wavelength shift setting device (70) being coupled with the pulse shaper device (20) and/or the multi-pass cell device (10) and/or being arranged for adjusting the input power of the laser pulses introduced to the multi-pass cell device (10), wherein the centre wavelength shift setting device (70) is configured for tuning, in particular feedback-controlling, at least one of a direction and an amount of the centre wavelength shift of the laser pulses (1).

**9.** Wavelength conversion apparatus according to one of the foregoing claims, wherein

- the multi-pass cell device (10) is dispersion-balanced, wherein mirror dispersion in the multi-pass cell device (10) is matched to linear dispersion acquired by the laser pulses (1) in the optically nonlinear medium.

**10.** Wavelength conversion apparatus according to one of the foregoing claims, further comprising at least one of the features

- an end compressor device (80) is arranged downstream of the multi-pass cell device (10) for temporally compressing the laser pulses (1) after passing the multi-pass cell device (10), and
- the pulse shaper device (20) comprises a further multi-pass cell device.

**11.** Laser source apparatus (200), comprising

- a laser source device (210) being arranged for creating laser pulses (1), and
- a wavelength conversion apparatus (100) according to one of the foregoing claims, being arranged for receiving the laser pulses (1) and for spectrally converting the laser pulses (1) by creating spectral components of the laser pulses (1).

**12.** Laser source apparatus according to claim 11, wherein

- the laser source device (210) is configured for creating the laser pulses (1) with a pulse duration in a range from 10 fs to 1 ns, an average power in a range from 1 W, in particular from 50 W, to 100 kW, and/or a peak power in a range from 10 MW, in particular from 10 GW, to 100 TW.

**13.** Laser source apparatus according to claim 11 or 12, wherein

- the pulse shaper device (20) of the wavelength conversion apparatus (100) is included in the laser source device (210).

**14.** Wavelength conversion method for spectrally converting laser pulses (1) by creating new spectral components (2) of the laser pulses (1), comprising the steps of

- creating the laser pulses (1) to be converted with a laser source device (210), and
- receiving the laser pulses (1) to be converted by a multi-pass cell device (10) including an optically non-linear medium (11) and transmitting the laser pulses (1) through the optically non-linear medium (11) multiple times, wherein the spectral components of the laser pulses (1) are created by self-phase modulation,
**characterized by**
- shaping the laser pulses (1) to be converted with a pulse shaper device (20) being arranged between the laser source device and the multi-pass cell device (10) and being capable of changing the spectral phase and/or the amplitude of the laser pulses (1), wherein
- the pulse shaper device (20) provides the laser pulses (1) to be converted with a non-symmetrical temporal pulse shape (3) having a leading flank (4) and a trailing flank (5) with different amounts of steepness, and
- the non-symmetrical temporal pulse shape (3) yields a centre wavelength shift of the laser pulses (1) by the self-phase modulation.

**15.** Wavelength conversion method according to claim 14, including

- creating the leading flank (4) or the trailing flank (5) as an abruptly changing flank, in particular for adapting the non-symmetrical temporal pulse shape (3) to a non-symmetrical saw-tooth shape.

16. Wavelength conversion method according to one of the claims 14 to 15, including

- forming the non-symmetrical temporal pulse shape (3) such that the leading flank (4) has a larger amount of steepness than the trailing flank (5) and the centre wavelength of the laser pulses (1) is shifted to shorter wavelengths, or
- forming the non-symmetrical temporal pulse shape (3) such that the trailing flank (5) has a larger amount of steepness than the leading flank (4) and the centre wavelength of the laser pulses (1) is shifted to longer wavelengths.

17. Wavelength conversion method according to one of the claims 14 to 16, further comprising

- subjecting the laser pulses (1) after passing the multi-pass cell device (10) to spectrally filtering and/or separating from residual broadband spectral components.

18. Wavelength conversion method according to one of the claims 14 to 17, further comprising

- amplifying the laser pulses (1) before providing them to the multi-pass cell device (10).

19. Wavelength conversion method according to one of the claims 14 to 18, further comprising

- tuning at least one of a direction and amount of the centre wavelength shift of the laser pulses (1) by a centre wavelength shifting device (70) being coupled with the pulse shaper device (20) and/or the multi-pass cell device (10) and/or being arranged for adjusting the input power of the laser pulses introduced to the multi-pass cell device (10).

20. Wavelength conversion method according to one of the claims 14 to 19, wherein

- the laser pulses (1) to be converted have a pulse duration in a range from 10 fs to 1 ns, an average power in a range from 1 W, in particular from 50 W, to 100 kW, and/or a peak power in a range from 10 MW, in particular from 10 GW, to 100 TW.

**Patentansprüche**

1. Wellenlängenumwandlungsvorrichtung (100), ausgestaltet zur spektralen Umwandlung von Laserimpulsen (1) durch Erzeugen neuer Spektralkomponenten (2) der Laserimpulse (1), umfassend

- ein Multipasszellengerät (10), das ein nichtlineares optisches Medium (11) umfasst und zum Aufnehmen der umzuwandelnden Laserimpulse (1) und zum mehrmaligen Übertragen der Laserimpulse (1) durch das nichtlineare optische Medium (11) angeordnet ist, wobei die neuen Spektralkomponenten (2) der Laserimpulse (1) durch Selbstphasenmodulation erzeugt werden,
**gekennzeichnet durch**
- ein Impulsformergerät (20), das dem Multipasszellengerät (10) vorgelagert angeordnet ist und in der Lage ist, die spektrale Phase und/oder die Amplitude der Laserimpulse (1) zu verändern, um die umzuwandelnden Laserimpulse (1) mit einer nichtsymmetrischen zeitlichen Impulsform (3) bereitzustellen, die eine vordere Flanke (4) und eine hintere Flanke (5) unterschiedlicher Steilheit aufweist, wobei die nichtsymmetrische zeitliche Impulsform (3) durch die Selbstphasenmodulation in dem Multipasszellengerät (10) zu einer Zentralwellenlängenverschiebung der Laserimpulse (1) führt.

2. Wellenlängenumwandlungsvorrichtung nach Anspruch 1, wobei

- das Impulsformergerät (20) zum Erzeugen der vorderen Flanke (4) oder der hinteren Flanke (5) als eine sich abrupt ändernde Flanke, insbesondere zum Anpassen der nichtsymmetrischen zeitlichen Impulsform (3) an eine nichtsymmetrische Sägezahnform, ausgestaltet ist.

3. Wellenlängenumwandlungsvorrichtung nach einem der vorhergehenden Ansprüche, wobei

- das Impulsformergerät (20) zum Formen der nichtsymmetrischen zeitlichen Impulsform (3) so, dass die vordere Flanke (4) eine größere Steilheit als die hintere Flanke (5) aufweist und die Zentralwellenlänge der Laserimpulse (1) zu kürzeren Wellenlängen verschoben ist, ausgestaltet ist, oder
- das Impulsformergerät (20) zum Formen der nichtsymmetrischen zeitlichen Impulsform (3) so, dass die hintere Flanke (5) eine größere Steilheit als die vordere Flanke (4) aufweist und die Zentralwellenlänge der Laserimpulse (1) zu längeren Wellenlängen verschoben ist, ausgestaltet ist.

**4.** Wellenlängenumwandlungsvorrichtung nach einem der vorhergehenden Ansprüche, ferner umfassend

- ein Spektralfiltergerät (30), das zum Aufnehmen der Laserimpulse (1), nachdem diese das Multipasszellengerät (10) passiert haben, und zum Unterziehen der Laserimpulse (1) einer spektralen Filterung und/oder Trennung von verbleibenden breitbandigen Spektralkomponenten angeordnet ist.

**5.** Wellenlängenumwandlungsvorrichtung nach einem der vorhergehenden Ansprüche, ferner umfassend

- ein Impulsverstärkergerät (40), das dem Multipasszellengerät (10) vorgelagert angeordnet ist, zum Verstärken der Laserimpulse (1), die dem Multipasszellengerät (10) bereitgestellt werden sollen.

**6.** Wellenlängenumwandlungsvorrichtung nach Anspruch 5, ferner umfassend

- ein Impulsdehnergerät (50), das dem Impulsverstärkergerät (40) vorgelagert angeordnet ist, zum zeitlichen Dehnen der Laserimpulse (1), und ein Impulskompressorgerät (60), das zwischen dem Impulsverstärkergerät (40) und dem Multipasszellengerät (10) angeordnet ist, zum zeitlichen Komprimieren der Laserimpulse (1).

**7.** Wellenlängenumwandlungsvorrichtung nach Anspruch 6, wobei

- das Impulsformergerät (20) zwischen dem Impulsdehnergerät (50) und dem Impulsverstärkergerät (40) oder zwischen dem Impulskompressorgerät (60) und dem Multipasszellengerät (10) angeordnet ist, und/oder
- das Impulsformergerät (20) in dem Impulsdehnergerät (50) und/oder in dem Impulskompressorgerät (60) umfasst ist.

**8.** Wellenlängenumwandlungsvorrichtung nach einem der vorhergehenden Ansprüche, ferner umfassend

- ein Gerät (70) zur Verschiebung der Zentralwellenlänge, das mit dem Impulsformergerät (20) und/oder dem Multipasszellengerät (10) gekoppelt ist und/oder zum Anpassen der Eingangsleistung der Laserimpulse, die in das Multipasszellengerät (10) eingebracht werden, angeordnet ist, wobei das Gerät (70) zur Verschiebung der Zentralwellenlänge zum Abstimmen, insbesondere Rückkopplungssteuern, mindestens eines von einer Richtung und einem Betrag der Zentralwellenlängenverschiebung der Laserimpulse (1) ausgestaltet ist.

**9.** Wellenlängenumwandlungsvorrichtung nach einem der vorhergehenden Ansprüche, wobei

- das Multipasszellengerät (10) dispersionsausgeglichen ist, wobei die Spiegeldispersion in dem Multipasszellengerät (10) an die Lineardispersion angeglichen ist, die von den Laserimpulsen (1) in dem nichtlinearen optischen Medium angenommen wird.

**10.** Wellenlängenumwandlungsvorrichtung nach einem der vorhergehenden Ansprüche, die ferner mindestens eines der folgenden Merkmale umfasst

- dem Multipasszellengerät (10) nachgelagert angeordnet ist ein Endkompressorgerät (80) zum zeitlichen Komprimieren der Laserimpulse (1), nachdem diese das Multipasszellengerät (10) passiert haben, und
- das Impulsformergerät (20) umfasst ein weiteres Multipasszellengerät.

**11.** Laserquellenvorrichtung (200), umfassend

- ein Laserquellengerät (210), das zum Erzeugen von Laserimpulsen (1) angeordnet ist, und
- eine Wellenlängenumwandlungsvorrichtung (100) nach einem der vorhergehenden Ansprüche, die zum Aufnehmen der Laserimpulse (1) und zum spektralen Umwandeln der Laserimpulse (1) durch Erzeugen von Spektralkomponenten der Laserimpulse (1) angeordnet ist.

**12.** Laserquellenvorrichtung nach Anspruch 11, wobei

- das Laserquellengerät (210) zum Erzeugen der Laserimpulse (1) mit einer Impulsdauer in einem Bereich von 10 fs bis 1 ns, einer mittleren Leistung in einem Bereich von 1 W, insbesondere von 50 W, bis 100 kW und/oder einer Spitzenleistung in einem Bereich von 10 MW, insbesondere von 10 GW, bis 100 TW ausgestaltet ist.

**13.** Laserquellenvorrichtung nach Anspruch 11 oder 12, wobei

- das Impulsformergerät (20) der Wellenlängenumwandlungsvorrichtung (100) in dem Laserquellengerät (210) umfasst ist.

**14.** Wellenlängenumwandlungsverfahren zur spektralen Umwandlung von Laserimpulsen (1) durch Erzeugen neuer Spektralkomponenten (2) der Laserimpulse (1), umfassend die Schritte

- Erzeugen der umzuwandelnden Laserimpulse (1) mit einem Laserquellengerät (210), und

- Aufnehmen der umzuwandelnden Laserimpulse (1) mittels eines Multipasszellengeräts (10), das ein nichtlineares optisches Medium (11) umfasst, und mehrmaliges Übertragen der Laserimpulse (1) durch das nichtlineare optische Medium (11), wobei die Spektralkomponenten der Laserimpulse (1) durch Selbstphasenmodulation erzeugt werden,

**gekennzeichnet durch**

- Formen der umzuwandelnden Laserimpulse (1) mit einem Impulsformergerät (20), das zwischen dem Laserquellengerät und dem Multipasszellengerät (10) angeordnet ist und in der Lage ist, die spektrale Phase und/oder die Amplitude der Laserimpulse (1) zu verändern, wobei

- das Impulsformergerät (20) die umzuwandelnden Laserimpulse (1) mit einer nichtsymmetrischen zeitlichen Impulsform (3) bereitstellt, die eine vordere Flanke (4) und eine hintere Flanke (5) unterschiedlicher Steilheit aufweist, und

- die nichtsymmetrische zeitliche Impulsform (3) durch die Selbstphasenmodulation zu einer Zentralwellenlängenverschiebung der Laserimpulse (1) führt.

15. Wellenlängenumwandlungsverfahren nach Anspruch 14, umfassend

- Erzeugen der vorderen Flanke (4) oder der hinteren Flanke (5) als eine sich abrupt ändernde Flanke, insbesondere zum Anpassen der nichtsymmetrischen zeitlichen Impulsform (3) an eine nichtsymmetrische Sägezahnform.

16. Wellenlängenumwandlungsverfahren nach einem der Ansprüche 14 bis 15, umfassend

- Formen der nichtsymmetrischen zeitlichen Impulsform (3) so, dass die vordere Flanke (4) eine größere Steilheit als die hintere Flanke (5) aufweist und die Zentralwellenlänge der Laserimpulse (1) zu kürzeren Wellenlängen verschoben ist, oder

- Formen der nichtsymmetrischen zeitlichen Impulsform (3) so, dass die hintere Flanke (5) eine größere Steilheit als die vordere Flanke (4) aufweist und die Zentralwellenlänge der Laserimpulse (1) zu längeren Wellenlängen verschoben ist.

17. Wellenlängenumwandlungsverfahren nach einem der Ansprüche 14 bis 16, ferner umfassend

- Unterziehen der Laserimpulse (1), nachdem diese das Multipasszellengerät (10) passiert haben, einer spektralen Filterung und/oder Trennung von verbleibenden breitbandigen Spektralkomponenten.

18. Wellenlängenumwandlungsverfahren nach einem der Ansprüche 14 bis 17, ferner umfassend

- Verstärken der Laserimpulse (1), bevor diese dem Multipasszellengerät (10) bereitgestellt werden.

19. Wellenlängenumwandlungsverfahren nach einem der Ansprüche 14 bis 18, ferner umfassend

- Abstimmen mindestens eines von einer Richtung und einem Betrag der Zentralwellenlängenverschiebung der Laserimpulse (1) mittels eines Geräts (70) zur Verschiebung der Zentralwellenlänge, das mit dem Impulsformergerät (20) und/oder dem Multipasszellengerät (10) gekoppelt ist und/oder zum Anpassen der Eingangsleistung der Laserimpulse, die in das Multipasszellengerät (10) eingebracht werden, angeordnet ist.

20. Wellenlängenumwandlungsverfahren nach einem der Ansprüche 14 bis 19, wobei

- die umzuwandelnden Laserimpulse (1) eine Impulsdauer in einem Bereich von 10 fs bis 1 ns, eine mittlere Leistung in einem Bereich von 1 W, insbesondere von 50 W, bis 100 kW und/oder eine Spitzenleistung in einem Bereich von 10 MW, insbesondere von 10 GW, bis 100 TW aufweisen.

**Revendications**

1. Appareil de conversion de longueur d'onde (100), configuré pour convertir spectralement des impulsions laser (1) en créant de nouvelles composantes spectrales (2) des impulsions laser (1), comprenant

- un dispositif à cellule multi-passes (10) comprenant un milieu optiquement non linéaire (11), et agencé pour recevoir les impulsions laser (1) à convertir et pour transmettre plusieurs fois les impulsions laser (1) à travers le milieu optiquement non linéaire (11), dans lequel les nouvelles composantes spectrales (2) des impulsions laser (1) sont créées par automodulation de phase,

**caractérisé par**

- un dispositif metteur en forme d'impulsions (20) agencé en amont du dispositif à cellule multi-passes (10) et capable de changer la phase spectrale et/ou l'amplitude des impulsions laser (1) pour fournir aux impulsions laser (1) à convertir une forme d'impulsion temporelle non symétrique (3) ayant un flanc avant (4) et un flanc arrière (5) avec différentes valeurs de pente, dans lequel la forme d'impulsion temporelle non symétrique (3) produit un décalage de longueur d'onde centrale des impulsions laser (1) par l'automodulation de phase dans le dispositif à cellule multi-passes (10).

2. Appareil de conversion de longueur d'onde selon la revendication 1, dans lequel

- le dispositif metteur en forme d'impulsions (20) est configuré pour créer le flanc avant (4) ou le flanc arrière (5) comme un flanc à changement brusque, en particulier pour adapter la forme d'impulsion temporelle non symétrique (3) à une forme en dents de scie non symétrique.

3. Appareil de conversion de longueur d'onde selon l'une des revendications précédentes, dans lequel

- le dispositif metteur en forme d'impulsions (20) est configuré pour former la forme d'impulsion temporelle non symétrique (3) de telle sorte que le flanc avant (4) présente une plus grande valeur de pente que le flanc arrière (5), et que la longueur d'onde centrale des impulsions laser (1) est décalée vers des longueurs d'onde plus petites, ou
- le dispositif metteur en forme d'impulsions (20) est configuré pour former la forme d'impulsion temporelle non symétrique (3) de telle sorte que le flanc arrière (5) présente une plus grande valeur de pente que le flanc avant (4), et que la longueur d'onde centrale des impulsions laser (1) est décalée vers des longueurs d'onde plus grandes.

4. Appareil de conversion de longueur d'onde selon l'une des revendications précédentes, comprenant en outre

- un dispositif de filtrage spectral (30) agencé pour recevoir les impulsions laser (1) après être passé par le dispositif à cellule multi-passes (10) et pour soumettre les impulsions laser (1) à un filtrage spectral et/ou à une séparation spectrale des composantes spectrales résiduelles à large bande.

5. Appareil de conversion de longueur d'onde selon l'une des revendications précédentes, comprenant en outre

- un dispositif amplificateur d'impulsions (40) agencé en amont du dispositif à cellule multi-passes (10) pour amplifier les impulsions laser (1) à fournir au dispositif à cellule multi-passes (10).

6. Appareil de conversion de longueur d'onde selon la revendication 5, comprenant en outre

- un dispositif étireur d'impulsions (50) agencé en amont du dispositif amplificateur d'impulsions (40) pour étirer temporellement les impulsions laser (1), et un dispositif compresseur d'impulsions (60) agencé entre le dispositif amplificateur d'impulsions (40) et le dispositif à cellule multi-passes (10) pour comprimer temporellement les impulsions laser (1).

7. Appareil de conversion de longueur d'onde selon la revendication 6, dans lequel

- le dispositif metteur en forme d'impulsions (20) est agencé entre le dispositif étireur d'impulsions (50) et le dispositif amplificateur d'impulsions (40), ou entre le dispositif compresseur d'impulsions (60) et le dispositif à cellule multi-passes (10), et/ou
- le dispositif metteur en forme d'impulsions (20) est inclus dans le dispositif étireur d'impulsions (50) et/ou dans le dispositif compresseur d'impulsions (60).

8. Appareil de conversion de longueur d'onde selon l'une des revendications précédentes, comprenant en outre

- un dispositif de réglage du décalage de longueur d'onde centrale (70) couplé au dispositif metteur en forme d'impulsions (20) et/ou au dispositif à cellule multi-passes (10) et/ou agencé pour ajuster la puissance d'entrée des impulsions laser introduites dans le dispositif à cellule multi-passes (10), dans lequel le dispositif de réglage de décalage de longueur d'onde centrale (70) est configuré pour ajuster, en particulier pour contrôler par rétroaction, au moins un paramètre parmi une direction et une quantité du décalage de longueur d'onde centrale des impulsions laser (1).

9. Appareil de conversion de longueur d'onde selon l'une des revendications précédentes, dans lequel

- le dispositif à cellule multi-passes (10) est équilibré en dispersion, dans lequel la dispersion par miroir dans le dispositif à cellule multi-passes (10) est mise en correspondance avec la dispersion linéaire acquise par les impulsions laser (1) dans le milieu optiquement non linéaire.

10. Appareil de conversion de longueur d'onde selon l'une des revendications précédentes, comprenant en outre au moins l'une des caractéristiques suivantes :

- un dispositif compresseur d'extrémité (80) est agencé en aval du dispositif à cellule multi-passes (10) pour comprimer temporellement les impulsions laser (1) après qu'elles sont passées par le dispositif à cellule multi-passes (10), et
- le dispositif metteur en forme d'impulsions (20) comprend un autre dispositif à cellule multi-passes.

11. Appareil de source laser (200), comprenant

- un dispositif de source laser (210) agencé pour créer des impulsions laser (1), et
- un appareil de conversion de longueur d'onde (100) selon l'une des revendications précédentes, agencé pour recevoir les impulsions laser (1) et pour convertir spectralement les impulsions laser (1) en créant des composantes spectrales des impulsions laser (1).

12. Appareil de source laser selon la revendication 11, dans lequel

- le dispositif de source laser (210) est configuré pour créer les impulsions laser (1) avec une durée d'impulsion comprise dans une plage de 10 fs à 1 ns, une puissance moyenne comprise dans une plage de 1 W, en particulier de 50 W, à 100 kW, et/ou une puissance de crête comprise dans une plage de 10 MW, en particulier de 10 GW, à 100 TW.

13. Appareil de source laser selon la revendication 11 ou 12, dans lequel

- le dispositif metteur en forme d'impulsions (20) de l'appareil de conversion de longueur d'onde (100) est inclus dans le dispositif de source laser (210).

14. Procédé de conversion de longueur d'onde pour convertir spectralement des impulsions laser (1) en créant de nouvelles composantes spectrales (2) des impulsions laser (1), comprenant les étapes consistant à

- créer les impulsions laser (1) à convertir avec un dispositif de source laser (210), et
- recevoir les impulsions laser (1) à convertir dans un dispositif à cellule multi-passes (10) comprenant un milieu optiquement non linéaire (11) et transmettre plusieurs fois les impulsions laser (1) à travers le milieu optiquement non linéaire (11), dans lequel les composantes spectrales des impulsions laser (1) sont créées par automodulation de phase,
**caractérisé par**
- la mise en forme des impulsions laser (1) à convertir avec un dispositif metteur en forme d'impulsions (20) agencé entre le dispositif de source laser et le dispositif à cellule multi-passes (10) et capable de modifier la phase spectrale et/ou l'amplitude des impulsions laser (1), dans lequel
- le dispositif metteur en forme d'impulsions (20) procure aux impulsions laser (1) à convertir une forme d'impulsion temporelle non symétrique (3) ayant un flanc avant (4) et un flanc arrière (5) avec différentes valeurs de pente, et
- la forme d'impulsion temporelle non symétrique (3) produit un décalage de longueur d'onde centrale des impulsions laser (1) par l'automodulation de phase.

15. Procédé de conversion de longueur d'onde selon la revendication 14, comprenant

- la création du flanc avant (4) ou du flanc arrière (5) sous forme d'un flanc à changement brusque, en particulier pour adapter la forme d'impulsion temporelle non symétrique (3) à une forme en dents de scie non symétrique.

16. Procédé de conversion de longueur d'onde selon l'une des revendications 14 et 15, comprenant

- la formation de la forme d'impulsion temporelle non symétrique (3) de telle sorte que le flanc avant (4) présente une plus grande valeur de pente que le flanc arrière (5), et que la longueur d'onde centrale des impulsions laser (1) soit décalée vers des longueurs d'onde plus petites, ou
- la formation de la forme d'impulsion temporelle non symétrique (3) de telle sorte que le flanc arrière (5) présente une plus grande valeur de pente que le flanc avant (4), et que la longueur d'onde centrale des impulsions laser (1) soit décalée vers des longueurs d'onde plus grandes.

17. Procédé de conversion de longueur d'onde selon l'une des revendications 14 à 16, comprenant en outre

- la soumission des impulsions laser (1), après qu'elles sont passées dans le dispositif à cellule multi-passes (10), à un filtrage spectral et/ou à une séparation spectrale des composantes spectrales résiduelles à large bande.

18. Procédé de conversion de longueur d'onde selon l'une des revendications 14 à 17, comprenant en outre

- l'amplification des impulsions laser (1) avant de les fournir au dispositif à cellule multi-passes (10).

19. Procédé de conversion de longueur d'onde selon l'une des revendications 14 à 18, comprenant en outre

- le réglage d'au moins un paramètre parmi une direction et une quantité du décalage de longueur d'onde centrale des impulsions laser (1) par un dispositif de décalage de longueur d'onde centrale (70) couplé au dispositif metteur en forme d'impulsions (20) et/ou au dispositif à cellule multi-passes (10), et/ou agencé pour ajuster la puissance d'entrée des impulsions laser introduites dans le dispositif à cellule multi-passes (10).

20. Procédé de conversion de longueur d'onde selon l'une des revendications 14 à 19, dans lequel

- les impulsions laser (1) à convertir présentent une durée d'impulsion comprise dans une plage de 10 fs à 1 ns, une puissance moyenne comprise dans une plage de 1 W, en particulier de 50 W, à 100 kW, et/ou une puissance de crête comprise dans une plage de 10 MW, en particulier de 10 GW, à 100 TW.

FIG. 1

FIG. 2

FIG. 3

FIG. 4

FIG. 5

200

1

73    3

70

72    71

210    20    10    30    60

100

**FIG. 6**

200

1, 3    1

210    20    40    10    30

100

**FIG. 7**

200

1

210    40    20    10    30

100

**FIG. 8**

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021007460 A1
- US 7724787 B2
- US 8290317 B2
- US 20160064891 A1
- US 6141129 A
- DE 102014007159 B4
- US 4288691 A

**Non-patent literature cited in the description**

- **C. GREBING et al.** *Opt. Lett.,* 2020, vol. 45, 6250-6253
- **A.-L. VIOTTI et al.** *Optica,* 2022, vol. 9 (197
- **J. C. TRAVERS et al.** *Nat. Photonics,* 2019, vol. 13, 547-554
- **J. E. BEETAR et al.** *Sci. Adv,* 2020, vol. 6, 34
- **C. M. HEYL et al.** *J. Phys. Photonics,* 2022, vol. 4, 014002
- **H. STARK et al.** *Opt. Lett.,* 2021, vol. 46, 969-972
- **M. KAUMANNS et al.** *Opt. Lett.,* 2021, vol. 46, 929-932
- **M. SEIDEL et al.** *Ultrafast Science,* vol. 2022, https://doi.org/10.34133/2022/9754919